(19)

**Europäisches Patentamt**
**European Patent Office**
**Office européen des brevets**

(11) **EP 4 606 867 A1**

(12) **EUROPEAN PATENT APPLICATION**
published in accordance with Art. 153(4) EPC

(43) Date of publication:
**27.08.2025 Bulletin 2025/35**

(21) Application number: 23900376.7

(22) Date of filing: **08.11.2023**

(51) International Patent Classification (IPC):
$C08L\ 101/12^{(2006.01)}$       $C08J\ 5/10^{(2006.01)}$
$C08K\ 3/34^{(2006.01)}$       $C08L\ 1/02^{(2006.01)}$
$C08L\ 63/00^{(2006.01)}$

(52) Cooperative Patent Classification (CPC):
C08G 59/18; C08J 3/215; C08J 5/10; C08K 3/34;
C08K 7/26; C08L 1/02; C08L 63/00; C08L 101/00;
C08L 101/12

(86) International application number:
**PCT/JP2023/040211**

(87) International publication number:
**WO 2024/122254 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  05.12.2022  JP 2022194479

(71) Applicants:
 • **Mizuno Corporation**
   **Osaka-shi, Osaka 541-8538 (JP)**
 • **Mizuno Technics Corporation**
   **Gifu 503-1314 (JP)**

(72) Inventors:
 • **FUJIKAWA, Yoshihiro**
   **Osaka-shi, Osaka 559-8510 (JP)**
 • **NAKA, Yuri**
   **Osaka-shi, Osaka 559-8510 (JP)**
 • **MORI, Shunichi**
   **Osaka-shi, Osaka 559-8510 (JP)**
 • **TAKEDA, Shiori**
   **Yoro-gun, Gifu 503-1314 (JP)**
 • **KONDO, Keita**
   **Yoro-gun, Gifu 503-1314 (JP)**

(74) Representative: **advotec.**
   **Patent- und Rechtsanwaltspartnerschaft mbB**
   **Widenmayerstraße 4**
   **80538 München (DE)**

(54) **CURABLE RESIN COMPOSITION**

(57)    The curable resin composition at least contains a thermosetting resin and a composite powder containing cellulose nanofibers and a silicon-based porous material. The content ratio of the cellulose nanofibers and the silicon-based porous material is cellulose nanofibers : silicon-based porous material = 1:5 to 1:20 on a mass basis. In the composite powder, the cellulose nanofibers at least adhere to a surface of the silicon-based porous material or enter pores of the silicon-based porous material. The content of the composite powder relative to 100 parts by mass of the thermosetting resin is 0.1 parts by mass to 10 parts by mass.

EP 4 606 867 A1

**Description**

TECHNICAL FIELD

The present invention relates to a curable resin composition for use in rubber, resin, and carbon fiber-reinforced plastic (hereinafter referred to as "CFRP").

BACKGROUND ART

Since sporting goods always require "lighter and stronger materials," many products are manufactured using carbon fiber-reinforced plastics. For example, there is a great need, and also high potential demand, for CFRP having high impact resistance in products such as golf shafts and badminton rackets. Intensive research is therefore conducted on, for example, the modification of a matrix resin and the addition of a filler having excellent strength.

CFRP is light and has high strength. However, since its base material is a resin having low impact strength, CFRP does not have enough impact strength in practical use. As a countermeasure for this, an increase in the impact strength of CFRP by mixing cellulose nanofibers (hereinafter sometimes referred to as "CNFs") in a matrix resin has been investigated as a method for increasing the impact strength of CFRP.

"Stronger materials" are also sought for rubber and resin, which are used for many products, such as the outsole and midsole of shoes, and golf balls. In the case of rubber, reinforcement with carbon black is particularly known for enhancement in wear resistance and mechanical strength, and an inorganic filler such as silica is also widely and commonly used as a reinforcement material. It is known that rubber and resin are typically organic substances, and that a silane coupling agent is widely used to increase an interaction with silica, which is an inorganic substance, and further improve the reinforcement effect.

Adding a smaller amount of cellulose nanofibers as an alternative material in place of the carbon black and silica is widely investigated to achieve the same or higher reinforcement effect. However, due to the fact that cellulose nanofibers are compatible with water, they cannot be easily dispersed directly into rubber and resin.

Therefore, various methods for dispersing cellulose nanofibers in a matrix resin have been proposed. For example, a method has been proposed in which cellulose nanofibers containing moisture are subjected to alcohol substitution to remove the moisture contained in the cellulose nanofibers, the cellulose nanofibers after the alcohol substitution are dispersed in an epoxy resin, and then the alcohol is removed (evaporated). Further, instead of the alcohol substitution described above, a method has been proposed in which freeze-drying (or spray-drying) is performed on cellulose nanofibers containing moisture to remove the moisture contained in the cellulose nanofibers, and the cellulose nanofibers after the freeze-drying (or spray-drying) are dispersed in an epoxy resin (see, for example, Patent Document 1).

In addition, a method has been proposed in which chemical pulp in a dried state as the raw material of nanofibers is fed into the base resin and then kneaded using a pressurized kneader or twin-screw kneading extruder to defibrate the pulp and disperse it into the base resin (see, for example, Patent Document 2).

CITATION LIST

PATENT DOCUMENTS

Patent Document 1: Japanese Patent No. 5341787
Patent Document 2: Japanese Patent No. 6471377

SUMMARY OF THE INVENTION

TECHNICAL PROBLEM

Here, in the alcohol substitution method described in Patent Document 1, it is necessary to remove moisture contained in the microfibrillated cellulose by alcohol substitution and further remove alcohol after dispersing the microfibrillated cellulose in the epoxy resin. Thus, a large amount of time is required for the treatment of dispersing the cellulose nanofibers. Further, when the removal of moisture is incomplete, the residual moisture is vaporized to form voids in a heating treatment (100°C or higher) for curing the resin, and thus, the strength of the resin decreases.

In the freeze-drying method (or spray-drying method) described in Patent Document 1, dedicated equipment must be installed, and the obtained cellulose nanofibers are in the form of aerogel or powder. Thus, the cellulose nanofibers aggregate, and it is difficult to disperse the cellulose nanofibers in the epoxy resin.

In addition, in the method described in Patent Document 2, a dedicated twin-screw kneading extruder must be installed.

The present invention was made in view of the problems, and it is an objective to provide a curable resin composition capable of uniformly dispersing cellulose nanofibers in the thermosetting resin by a simple method and capable of reliably improving the strength in the state of maintaining the impregnating ability for reinforcing fibers such as carbon fibers.

SOLUTION TO THE PROBLEM

In order to achieve the above object, a curable resin composition of the present invention at least contains: a thermosetting resin; and a composite powder containing cellulose nanofibers and a silicon-based porous material. A content ratio of the cellulose nanofibers and the silicon-based porous material is cellulose nanofibers : silicon-based porous material = 1:5 to 1:20 on a mass basis. In the composite powder, the cellulose nanofibers at least adhere to a surface of the silicon-based porous material or enter pores of the silicon-based porous material. A content of the composite powder relative to 100 parts by mass of the thermosetting resin is 0.1 parts by mass to 10 parts by mass.

ADVANTAGES OF THE INVENTION

According to the present invention, it is possible to provide a curable resin composition capable of uniformly dispersing cellulose nanofibers in the thermosetting resin by a simple method and capable of reliably improving the strength in the state of maintaining the impregnating ability for reinforcing fibers such as carbon fibers.

BRIEF DESCRIPTION OF THE DRAWINGS

[FIG. 1] A graph showing a relationship between a content X (in parts by mass) of a silicon-based porous material contained in a dispersion liquid and a concentration Y (in mass%) of the cellulose nanofibers.
[FIG. 2] A scanning electron microscope (SEM) photograph showing a state of a composite powder of Example 1.
[FIG. 3] Photographs of a carbon atom derived from cellulose nanofibers in the composite powder of Example 1 by an energy dispersive X-ray spectroscopy (EDS).
[FIG. 4] A schematic view for explaining strength evaluation in Example 1.

DESCRIPTION OF EMBODIMENTS

Preferred embodiments of the present invention will now be described.

The curable resin composition of the present invention at least contains a thermosetting resin and a composite powder containing cellulose nanofibers and a silicon-based porous material.

(Thermosetting Resin)

The thermosetting resin of the present invention is not particularly limited as long as it is used for a fiber-reinforced plastic, and examples thereof include an epoxy resin, an unsaturated polyester resin, a polyamide resin, and a phenol resin. Among these, one kind may be used alone, or two or more kinds may be used in combination.

Among these thermosetting resins, it is preferable to use an epoxy resin from the viewpoint that the epoxy resin has higher adhesive performance and elastic modulus than other resins, and thus can hold fibers firmly together and transfer stress well in a fiber-reinforced composite material.

In view of high mechanical strength and excellent dimensional stability, heat resistance, and chemical resistance, examples of the epoxy resin used include: bisphenol type epoxy resins such as bisphenol A type, bisphenol F type, a bisphenol A/F mixed epoxy resin, and bisphenol S type; glycidyl amine type epoxy resins such as 1,3-bisaminomethylcyclohexane type, diamino diphenylmethane type, diamino diphenylsulfone type, glycidylaniline type, aminophenol type, and metaxylenediamine type; naphthalene type epoxy resins; alicyclic epoxy resins; tris(hydroxyphenyl)methane type; phenol novolac type; isocyanurate type; orthocresol novolac type; dicyclopentadiene novolac type; hydantoin type; biphenyl type; tetraphenylolethane type; and polyfunctional epoxy resins. Among these, one kind may be used alone, or two or more kinds may be used in combination.

These epoxy resins may be commercially available products such as, for example, "JER828," which is a bisphenol A type epoxy resin manufactured by Mitsubishi Chemical Corporation, "JER604," which is a polyfunctional epoxy resin manufactured by Mitsubishi Chemical Corporation, "DENATOOLXNR6809," which is a bisphenol A/F mixed epoxy resin manufactured by Nagase ChemteX Corporation, and others, namely jER630 (manufactured by Mitsubishi Chemical Corporation), jER807 (manufactured by Mitsubishi Chemical Corporation), jER152 (manufactured by Mitsubishi Chemical Corporation), HP4032 (manufactured by DIC Corporation), EXA-4580-1000 (manufactured by DIC Corporation), EXA-201 (manufactured by Nagase ChemteX Corporation), CELLOXIDE 2081 (manufactured by Daicel Corporation), CELLOXIDE 3000 (manufactured by Daicel Corporation), MY-0500 (manufactured by Huntsman Corporation), MY-0600 (manufactured by Huntsman Corporation), TETRAD-X (manufactured by Mitsubishi Gas Chemical Company, Inc.), GAN (manufactured by Nippon Kayaku Co., Ltd.), SR-HHPA (manufactured by Sakamoto Chemical Industry Co., Ltd.), and 1500NP (manufactured by Kyoeisha Chemical Co., Ltd.).

(Curing Agent)

The curable resin composition of the present invention contains a curing agent (curable resin) for curing the thermosetting resin. The curing agent is not particularly limited as long as it has an active group which reacts with an epoxy group when an epoxy resin is used as the thermosetting resin, for example, and examples thereof used include: amine-based curing agents such as aliphatic amine and aromatic amine; polyphenol; imidazole; carboxylic acid; acid anhydride-based curing agents such as carboxylic acid anhydride; carboxylic acid amide; mercaptan; and Lewis acids such as halogenated boron amine complex. Among these, one kind may be used alone, or two or more kinds may be used in combination.

The amine-based curing agent used can be, for example, modified aromatic amine-based curing agent such as diethyltoluenediamine, and the acid anhydride-based curing agent used can be, for example, modified alicyclic acid anhydride such as methyltetrahydrophthalic anhydride.

The mixing ratio of the curing agent to the thermosetting resin can be appropriately set depending on the kinds of the thermosetting resin and the curing agent to be used, but the content of the curing agent is preferably 25 parts by mass to 95 parts by mass relative to 100 parts by mass of the thermosetting resin in view of reliably curing the curable resin composition.

(Composite Powder)

A composite powder of the present invention contains cellulose nanofibers and a silicon-based porous material. The composite powder is dispersed in the above-mentioned thermosetting resin to be a base material of CFRP so that the strength of the curable resin composition of the present invention is increased in terms of stretchability and elasticity.

<Cellulose Nanofibers>

The cellulose nanofibers are not particularly limited, and known cellulose nanofibers can be widely adopted. Plant-derived cellulose, animal-derived cellulose, or bacteria-derived cellulose can be used as cellulose forming the cellulose nanofibers. Among these, one kind may be used alone, or two or more kinds may be used in combination.

As the plant-derived cellulose, for example, cellulose derived from hardwood (eucalyptus, populus, etc.), cellulose derived from softwood (pine, fir, cedar, cypress, etc.), cellulose derived from herbaceous plants (straw, bagasse, reed, kenaf, abaca, sisal, etc.), and seed hair fibers (cotton, etc.) can be used. Pulp as a raw material may be mechanical pulp obtained by mechanically processing wood chips, chemical pulp obtained by chemically removing a non-cellulose component from wood chips, or dissolving pulp obtained by removing a non-cellulose component, followed by purification.

Animal-derived cellulose such as ascidian, bacteria-derived cellulose such as nata de coco, or other types can also be used. Such cellulose does not necessarily have to consist of only a pure cellulose component and may include cellulose as a main component with a non-cellulose component associated therewith.

The main non-cellulose component associated with the cellulose nanofibers is not particularly limited and is selectable as appropriate according to applications. Examples thereof include hemicellulose and lignin.

The ratio of the pure cellulose component in the cellulose nanofibers may also be set as appropriate according to applications. For example, the ratio of the pure cellulose component is preferably 70 mass% or more, more preferably 80 mass% or more, relative to 100 mass% of the cellulose nanofibers. The upper limit of the ratio of the pure cellulose component can be 100 mass%.

The "ratio of cellulose" herein refers to the ratio of the pure cellulose component in which a β-glucose molecule is linearly polymerized by glycosidic linkage, relative to the mass of the whole cellulose nanofibers (100 mass%).

The degree of polymerization of the pure cellulose component contained in the cellulose nanofibers may be set as appropriate according to applications. For example, a cellulose component having a degree of polymerization of 500 or more, particularly 600 or more can be employed. The upper limit of the degree of polymerization of the cellulose component is not particularly limited and can be 100,000, for example.

The crystallinity of the pure cellulose component contained in the cellulose nanofibers is not particularly limited and is preferably 60% or more, more preferably 70% or more. The upper limit of the crystallinity of the cellulose is not particularly limited and can be 99%, for example. Examples of a crystal structure of the cellulose component include Type I, Type II, Type III and Type IV.

The size of the cellulose nanofibers is not particularly limited. The cellulose nanofibers preferably have an elongated shape having a high aspect ratio, a diameter preferably of 3 nm to 100 nm, and a length of 100 nm or more, preferably 5 $\mu$m or more, considering that such cellulose nanofibers form some type of network or structure in the rubber or resin and that the network or structure effectively has elasticity.

The "diameter of the cellulose nanofibers" herein refers to a median diameter obtained by observing 50 or more randomly extracted cellulose nanofibers, using a scanning electron microscope (SEM).

In order to facilitate dispersion in the above-mentioned thermosetting resin, cellulose nanofibers in which a polar group, such as a carboxyl group, and a hydrophobic functional group are introduced by an oxidation process in the presence of 2,2,6,6-tetramethyl-1-piperidine-N-oxyl (TEMPO) as a catalyst (TEMPO-mediated oxidation process) can be employed as the cellulose nanofibers.

For example, pulp that is a fiber raw material, TEMPO that is a catalyst, sodium hypochlorite, sodium hypobromite, etc., are added to a sodium phosphate buffer solution to cause the above oxidation process, thereby making it possible to obtain cellulose nanofibers which are produced by chemical fibrillation and in which a carboxyl group is introduced.

A commercially available product, such as "CELLENPIA" manufactured by Nippon Paper Industries Co., Ltd. and "RHEOCRYSTA" manufactured by DKS Co. Ltd., (both in a slurry form), can be used as the cellulose nanofibers that have undergone fibrillation by using a TEMPO oxidation catalyst.

Other available chemical fibrillation methods that are different from, but similar to, the TEMPO-mediated oxidation include, for example, phosphorylation and esterification of phosphorous acid. The present invention aims to provide a composite powder that is easily dispersed in the above-mentioned thermosetting resin. Since in production of the composite powder, a starting material is an aqueous solution of the cellulose nanofibers, it is possible to use a commercially available aqueous dispersion or aqueous solution of cellulose nanofibers obtained by another fibrillation method (such as an aqueous counter collision method, a water jet method, and a mechanical fibrillation method using a grinder) different from the above-mentioned chemical fibrillation process.

<Silicon-Based Porous Material>

The silicon-based porous material has a large number of pores (porous body). In the present invention, diatomaceous earth or zeolite can be used as the silicon-based porous material. Among these, one kind may be used alone, or two or more kinds may be used in combination.

The pore diameter of the pores of the silicon-based porous material is not particularly limited and is preferably 0.2 nm to 2,000 nm in order that the cellulose nanofibers can enter the pores easily. The shape of the pores of the silicon-based porous material is not particularly limited.

In the case of, for example, employing diatomaceous earth as the silicon-based porous material, the cellulose nanofibers are supported while entering the pores of the diatomaceous earth. It is therefore possible to prevent aggregation of the cellulose nanofibers. Furthermore, the cellulose nanofibers entering the pores of the diatomaceous earth can be dispersed uniformly in the thermosetting resin.

In the case of, for example, employing as the silicon-based porous material, zeolite having a smaller pore diameter than the cellulose nanofibers, the cellulose nanofibers do not enter the pores of the zeolite, but the cellulose nanofibers are more likely to adhere to the surface of the zeolite because the specific surface area of zeolite is larger than the specific surface area of the diatomaceous earth. It is thus possible to disperse the cellulose nanofibers adhering to the surface of the zeolite in the thermosetting resin uniformly, similarly to the case where the cellulose nanofibers enter the pores of the diatomaceous earth.

That is, according to the composite powder of the present invention, the cellulose nanofibers at least adhere to the surface of the silicon-based porous material or enter the pores of the silicon-based porous material, which allows the cellulose nanofibers to be dispersed uniformly in the thermosetting resin. As a result, the strength of the curable resin composition of the present invention and the strength of CFRP can be increased reliably.

According to the curable resin composition of the present invention, the content ratio of the cellulose nanofibers and the silicon-based porous material in the composite powder (i.e., in the curable resin composition) is cellulose nanofibers : silicon-based porous material = 1:5 to 1:20 on the mass basis (i.e., the content of the silicon-based porous material is 5 parts by mass to 20 parts by mass relative to 1 part by mass of the cellulose nanofibers).

When the content ratio is from 1:5 to 1:20, a decrease in the amount of the cellulose nanofibers taken into the pores due to a lack of the silicon-based porous material (or the amount of the cellulose nanofibers adhering to the surface of the silicon-based porous material) can be suppressed. Therefore, the cellulose nanofibers can be reliably taken (adhered), and a decrease in dispersibility of the silicon-based porous material in which the cellulose nanofibers have entered can be reduced when the composite material is mixed into the thermosetting resin.

In other words, if the content ratio of the cellulose nanofibers is high (i.e., if the content of the silicon-based porous material is less than 5 parts by mass relative to 1 part by mass of the cellulose nanofibers), the ratio of the silicon-based porous material relative to the cellulose nanofibers is small; therefore, aggregates of the cellulose nanofibers may be formed due to the cellulose nanofibers covering most of the surface of the silicon-based porous material. This may result in a reduction in the dispersibility of the silicon-based porous material in which the cellulose nanofibers have entered when the composite powder is mixed in the thermosetting resin.

If the content ratio of the silicon-based porous material is high (i.e., if the content of the silicon-based porous material is more than 20 parts by mass relative to 1 part by mass of the cellulose nanofibers), the ratio of the silicon-based porous material to the cellulose nanofibers is large; therefore, dispersibility of the silicon-based porous material in which cellulose nanofibers have entered may decrease.

As can be seen from above, in the present invention, in order to improve dispersibility of the composite powder (i.e., the silicon-based porous material in which the cellulose nanofibers have entered) in the thermosetting resin, the content ratio of the cellulose nanofibers and the silicon-based porous material in the composite powder (i.e., in the curable resin composition) is set to be cellulose nanofibers : silicon-based porous material = 1:5 to 1:20 on the mass basis.

In the curable resin composition of the present invention, the content of the composite powder relative to 100 parts by mass of the thermosetting resin is 0.1 parts by mass to 10 parts by mass.

This is because if the content of the composite powder is less than 0.1 parts by mass, the amount of the composite powder is small, whereby it is difficult to sufficiently improve the strength of the curable resin composition. This is also because if the content of the composite powder is more than 10 parts by mass, the amount of the composite powder is large, whereby the viscosity of the curable resin composition is too high (i.e., flowability of the curable resin composition decreases), and it is difficult to cause the curable resin composition to penetrate into reinforcing fibers such as carbon fibers, and as a result, it is difficult to improve the strength of the curable resin composition in CFRP.

As can be seen from above, in the present invention, by setting the content of the composite powder to 0.1 parts by mass to 10 parts by mass relative to 100 parts by mass of the thermosetting resin, it becomes possible to improve the strength of the curable resin composition in CFRP and maintain impregnating ability of the curable resin composition for the reinforcing fibers such as carbon fibers.

In view of improving the strength and reducing costs while maintaining impregnating ability, the content of the composite powder is preferably 0.1 parts by mass to 5.0 parts by mass, more preferably 0.1 parts by mass to 2.5 parts by mass, relative to 100 parts by mass of the thermosetting resin.

(Other Components)

Other components may be mixed in the curable resin composition of the present invention within a range not imparting the effects of the present invention.

Examples of the other components include a thermoplastic resin for controlling flowability, a curing accelerator for improving reactivity, rubber particles for imparting toughness to the epoxy resin, and a surfactant for improving wettability with the reinforcing fibers.

Examples of the thermoplastic resin include polyester, polycarbonate, polyphenylene sulfide, polyacrylate, polyamide, polyimide, polyaramid, polybenzimidazole, polyetherimide, polysulfone, and polyethersulfone. These thermoplastic resins may be mixed in the state of being dissolved in an epoxy resin, or may be placed on a surface layer of prepreg or preform in the form of nonwoven fabric, mesh, pulp, fine particles, long fibers, short fibers, and fabric. Among these, one kind may be used alone, or two or more kinds may be used in combination.

Examples of the curing accelerator include: monoethylamine trifluoride; urea compounds such as phenyl dimethyl urea (PDMU); imidazole compounds; and amine complexes such as a boron trichloride amine complex.

In view of handleability or the like, examples of the rubber particles include core-shell rubber particles obtained by graft polymerization of a different kind of polymer on the surfaces of crosslinked rubber particles, and crosslinked rubber particles, and examples of the kind of the rubber include silicon rubber, butyl rubber, NBR, SBR, butadiene rubber, and acryl rubber. Among these, one kind may be used alone, or two or more kinds may be used in combination.

The surfactant used can be, for example, "BYK-A530" manufactured by BYK Japan KK.

Next, a method for manufacturing a curable resin composition of the present invention will be described. A method for manufacturing a curable resin composition of the present invention includes: preparing a dispersion liquid of a composite powder; producing a dried material by drying the dispersion liquid of the composite powder; producing the composite powder by grinding the dried material; and producing a curable resin composition by mixing the composite powder produced in a thermosetting resin.

(Dispersion Liquid Preparation Step)

First, a silicon-based porous material is mixed in an aqueous solvent in which the cellulose nanofibers are dispersed, thereby preparing a dispersion liquid.

The aqueous solvent (dispersion medium) herein is not particularly limited, and water (e.g., purified water) can be employed, and an alcohol, such as ethanol or isopropanol, may be added to water, if necessary.

The content of the cellulose nanofibers in the aqueous solvent is set such that a relationship of the following expression (1) is satisfied, where X (in parts by mass) is the content of the silicon-based porous material relative to 1 part by mass of the cellulose nanofibers contained in the dispersion liquid, and Y (in mass%) is the concentration of the cellulose nanofibers.

[Math. 1]

$$Y \leq -0.048X + 1.96 \qquad (1)$$

This expression is set because if the concentration Y of the cellulose nanofibers is greater than the right side of the expression (1) (i.e., -0.048X + 1.96), a thickening effect of the cellulose nanofibers causes a rapid increase of the viscosity of the aqueous solvent in which the cellulose nanofibers are dispersed, making it difficult to cause sufficient stirring to mix the silicon-based porous material in the aqueous solvent in which the cellulose nanofibers are dispersed.

The expression (1) will now be described in further detail. The present inventors employed one type of cellulose nanofibers subjected to fibrillation under Tempo-mediated oxidation (represented by "Tempo-oxidation fibrillation CNF" in Table 1) and two types of cellulose nanofibers subjected to mechanical fibrillation (represented by "Mechanical fibrillation CNF A" and "Mechanical fibrillation CNF B" in Table 1), and changed the content (in parts by mass) of the silicon-based porous material (diatomaceous earth) relative to 1 part by mass (in mass%) of the cellulose nanofibers contained in a mixed aqueous solution (dispersion liquid) in a range of 0 parts by mass to 20 parts by mass to measure the viscosity of the mixed aqueous solution. The viscosity of the mixed aqueous solution (the temperature of the mixed aqueous solution: 25°C) was measured using an RE80-type viscometer manufactured by Toki Sangyo Co., Ltd. The stirring properties were evaluated as follows. If the mixed aqueous solution could be stirred, it was evaluated as ○, and if the mixed aqueous solution could not be stirred, it was evaluated as ×. Table 1 shows the results.

[Table 1]

| Type of CNF | Content X of Diatomaceous Earth (parts by mass) | Concentration Y of CNF (mass%) | Stirring Properties | Viscosity of Mixed Aqueous Solution (MPa·s) |
|---|---|---|---|---|
| Tempo-Oxidation Fibrillation CNF | 5 | 1.19 | ○ | 688 |
| Tempo-Oxidation Fibrillation CNF | 2 | 0.57 | ○ | 69 |
| Tempo-Oxidation Fibrillation CNF | 3 | 0.47 | ○ | 49 |
| Tempo-Oxidation Fibrillation CNF | 4 | 0.44 | ○ | 32 |
| Tempo-Oxidation Fibrillation CNF | 10 | 0.57 | ○ | 139 |
| Tempo-Oxidation Fibrillation CNF | 10 | 1.34 | ○ | 1495 |
| Tempo-Oxidation Fibrillation CNF | 15 | 1.13 | ○ | 1449 |
| Tempo-Oxidation Fibrillation CNF | 0 | 0.54 | ○ | 502 |
| Tempo-Oxidation Fibrillation CNF | 0 | 2.00 | × | 4128 |
| Tempo-Oxidation Fibrillation CNF | 0 | 1.50 | ○ | 1373 |
| Tempo-Oxidation Fibrillation CNF | 0 | 1.22 | ○ | 1371 |
| Tempo-Oxidation Fibrillation CNF | 0 | 0.81 | ○ | 698 |
| Mechanical Fibrillation CNF A | 10 | 0.82 | ○ | 146 |
| Mechanical Fibrillation CNF A | 0 | 0.94 | ○ | 46 |
| Mechanical Fibrillation CNF A | 0 | 1.66 | ○ | 274 |
| Mechanical Fibrillation CNF A | 0 | 2.00 | × | 2396 |

(continued)

| Type of CNF | Content X of Diatomaceous Earth (parts by mass) | Concentration Y of CNF (mass%) | Stirring Properties | Viscosity of Mixed Aqueous Solution (MPa·s) |
|---|---|---|---|---|
| Mechanical Fibrillation CNF A | 0 | 1.30 | ○ | 113 |
| Mechanical Fibrillation CNF B | 5 | 1.68 | ○ | 704 |
| Mechanical Fibrillation CNF B | 10 | 1.22 | ○ | 278 |
| Mechanical Fibrillation CNF B | 15 | 1.10 | ○ | 714 |
| Mechanical Fibrillation CNF B | 20 | 0.95 | ○ | 693 |
| Mechanical Fibrillation CNF B | 0 | 1.50 | ○ | 1289 |
| Mechanical Fibrillation CNF B | 0 | 1.00 | ○ | 238 |
| Mechanical Fibrillation CNF B | 0 | 2.00 | × | 1746 |
| Mechanical Fibrillation CNF B | 0 | 1.10 | ○ | 687 |

As can be seen in Table 1, in the case where the concentration of the cellulose nanofibers in the aqueous solution in which the cellulose nanofibers are dispersed is 2 mass%, the viscosity of the aqueous solution in which the cellulose nanofibers are dispersed is high even without addition of the diatomaceous earth, which indicates that stirring is difficult.

It is clearly known from Table 1 that it is possible to stir the mixed aqueous solution if its viscosity is 1495 mPa·s or less (in Table 1, the concentration of the cellulose nanofibers in this case is 1.34 mass%) and further that it is possible to stir the mixed aqueous solution if the concentration of the cellulose nanofibers is 1.68 mass% or less.

It can thus be said that the concentration of the cellulose nanofibers in the aqueous solution in which the cellulose nanofibers are dispersed needs to be 1.68% or less.

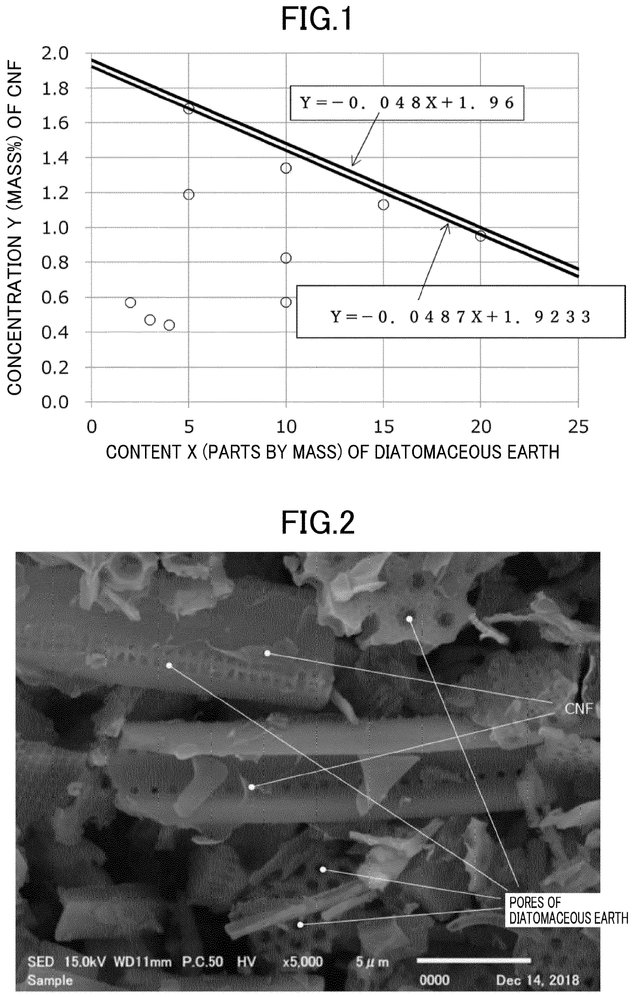

In FIG. 1, a relationship between the content X (parts by mass) of the diatomaceous earth and the concentration Y (mass%) of the cellulose nanofibers is plotted using the results in Table 1.

As shown in FIG. 1, it was found that the concentration Y of the CNF decreases as the content X of the diatomaceous earth increases, and that the highest concentration Y of the CNF that allows stirring of the aqueous solution in each content X of the diatomaceous earth has a negative linear correlation to the ratio of diatomaceous earth added.

It is therefore understood that the relationship of the expression (1) needs to be satisfied between the content X (in parts by mass) of the silicon-based porous material relative to 1 part by mass of the cellulose nanofibers contained in the dispersion liquid and the concentration Y (in mass%) of the cellulose nanofibers as shown in FIG. 1.

The following expression (2) is preferably satisfied between the content X (parts by mass) of the silicon-based porous material relative to 1 part by mass of the cellulose nanofibers contained in the dispersion liquid and the concentration Y (mass%) of the cellulose nanofibers. The expression (2) is obtained based on a relationship between the content X (parts by mass) of the diatomaceous earth and the concentration Y (mass%) of the cellulose nanofibers shown in Table 1 and FIG. 1 (specifically, relationships at two points: when X=5 and Y= 1.68 and when X=20 and Y= 0.95).
[Math. 2]

$$Y \leq -0.0487X + 1.9233 \quad (2)$$

Essentially, a hydroxyl group added to the cellulose nanofibers is converted to $-O^-$ in water, and a carboxyl group with which the hydroxyl group is substituted by the Tempo-mediated oxidation process is converted to $-COO^-$, which means that the cellulose nanofibers are negatively charged. Thus, preferably, the pH of the aqueous solvent in which the cellulose nanofibers are dispersed is alkaline in order to stabilize the groups and improve dispersibility.

In the present invention, as mentioned above, the content ratio of the cellulose nanofibers and the silicon-based porous material in the composite material (i.e., the curable resin composition) is set to be cellulose nanofibers : silicon-based porous material = 1:5 to 1:20 on the mass basis. Thus, the content ratio of the cellulose nanofibers and the silicon-based porous material in the dispersion liquid is cellulose nanofibers : silicon-based porous material = 1:5 to 1:20 on the mass basis (i.e., the content of the silicon-based porous material is 5 parts by mass to 20 parts by mass relative to 1 part by mass of the cellulose nanofibers).

As compared with mechanically fibrillated cellulose nanofibers, cellulose nanofibers obtained by chemical fibrillation have uniform fineness and thus easily enter the pores of the silicon-based porous material. Accordingly, in the present invention, cellulose nanofibers obtained by chemical fibrillation are preferably employed.

As equipment for mixing the silicon-based porous material in the aqueous solvent in which the cellulose nanofibers are dispersed, a beaker or flask with a stirrer bar, or any of various types of mixers, such as a propeller stirrer, a planetary centrifugal mixer, a homogenizer, an ultrasonic stirrer, a bead mill, a ball mill, and a planetary mixer can be used.

(Drying Step)

Next, the prepared dispersion liquid is dried to remove the aqueous solvent as a dispersion medium, thereby producing a dried material containing the cellulose nanofibers and the silicon-based porous material.

A device for use in this step is not particularly limited, and devices such as a hot air dryer and a vacuum dryer can be employed. Specifically, a hot air dryer manufactured by ESPEC CORP., (Labostar CONVECTION OVEN LC-122), for example, can be employed.

A drying temperature is preferably 80°C to 100°C in order to remove moisture from the mixed aqueous solution of the cellulose nanofibers and the silicon-based porous material and to shorten a drying time. Natural drying at room temperature may also be employed if the drying time is not restricted.

The drying time is preferably at least half a day to about two days if drying is performed in an atmosphere, for example, of 80°C to 100°C in order to leave no moisture in the dried material.

(Dried Material Grinding Step)

Next, the produced dried material is ground to produce the composite powder of the present invention in which the cellulose nanofibers adhere to the surface of the silicon-based porous material or enter the pores of the silicon-based porous material.

A device for use in this step is not particularly limited, and devices such as a household mill or a mixer or juicer for pulverizing foods can be employed as a small-scale device. For large-scale (mass) production, a large device, a mill, a grinder, or the like can be employed.

A high-pressure wet atomizer can be used to add the produced composite powder to the resin or the like. In this case, the size of the powder that can be used in this process depends on the diameter of the nozzle configured to generate high pressure. Thus, after the dried material grinding step, the composite powder can be sorted (classified) according to size with a sieve or the like to obtain only the composite powder with a size equal to or smaller than the diameter of the nozzle to be used.

As a method for obtaining the composite powder from the dispersion liquid, a spray drying method can also be employed which can shorten the drying step, the grinding step, and the classifying step. In this spray drying, the drying step and the grinding step may be performed separately or simultaneously.

According to the above-described method for manufacturing the composite powder of the present invention, the cellulose nanofibers are supported while entering the pores of the silicon-based porous material (or while adhering to the surface of the silicon-based porous material). It is therefore possible to obtain a composite powder capable of being uniformly dispersed in the thermosetting resin, and as a result, it is possible to reliably improve the strength of the curable resin composition of the present invention and the strength of CFRP containing the curable resin composition of the present invention.

(Curable Resin Composition Production Step)

Next, a curable resin composition in which a composite powder is dispersed in a thermosetting resin is produced. More specifically, the composite powder produced is added to the thermosetting resin, which is then mixed by stirring using a device. Thus, a curable resin composition in which a composite powder is dispersed in a thermosetting resin is produced.

As a device for mixing the composite powder in the thermosetting resin, for example, a propeller stirrer, a planetary centrifugal mixer, a homogenizer, an ultrasonic stirrer, a bead mill, a ball mill, a kneader, a three roll mill, a planetary mixer, a wet atomizer, or the like can be used.

In such a case, in the curable resin composition of the present invention, the content of the composite powder is 0.1 parts by mass to 10 parts by mass relative to 100 parts by mass of the thermosetting resin, and it thus becomes possible to improve the strength of the curable resin composition and maintain impregnating ability of the curable resin composition for the reinforcing fibers such as carbon fibers.

In the composite powder, the cellulose nanofibers at least adhere to a surface of the silicon-based porous material or enter pores of the silicon-based porous material. Unlike the conventional method, by using a simple device such as the stirrer, the composite powder (i.e., cellulose nanofibers) can be directly added to a matrix resin such as an epoxy resin in a liquid state before curing without water and solvent, which need to be removed in a subsequent step. The dispersibility of the cellulose nanofibers in the thermosetting resin can be improved by a simple method.

The amount of the composite powder added to the curable resin composition of the present invention is expressed in mass% relative to the total mass of the matrix resin (thermosetting resin) with which the CFRP is impregnated (i.e., the content (parts by mass) of the composite powder relative to 100 parts by mass of the thermosetting resin). In two-component resins that use a main agent and a curing agent, for example, the composite powder may be added in an amount determined based on the estimation of the increase in mass when the curing agent is added to the main agent.

In the case of using a plurality of epoxy resins in a blended state, the composite powder may be uniformly dispersed in all the epoxy resins. However, since the dispersion into each of the epoxy resins requires time and labor, the composite powder may be dispersed in only one epoxy resin to be blended in an amount estimated to be diluted with the other epoxy resins to such an extent that no kneading failure occurs, and then mixed with the other epoxy resins.

<Cured Product>

A cured product of the present invention is manufactured by curing the curable resin composition of the present invention. The method for curing the curable resin composition of the present invention is not particularly limited, but the curable resin composition of the present invention can be cured by a known heating method because the curable resin composition contains a thermosetting resin.

<Fiber-Reinforced Plastic>

The fiber-reinforced plastic of the present invention contains the curable resin composition of the present invention and reinforcing fibers (excluding the above-mentioned cellulose nanofibers), and is obtained by curing a composition (matrix resin) containing the curable resin composition of the present invention and the above-mentioned reinforcing fibers.

Examples of the reinforcing fibers (excluding the above-mentioned cellulose nanofibers) include carbon fibers (e.g., pitch-based fibers and PAN-based fibers), aramid fibers, polyarylate fibers, glass fibers, polyethylene fibers, ceramic fibers, PBO fibers (polyparaphenylene-benzobis-oxazole), and naturally derived fibers such as plant fibers (e.g., hemp fibers, flax fibers, and bamboo fibers) and animal fibers (e.g., wool, silk fibers). Among these, one kind may be used alone, or two or more kinds may be used in combination.

Examples of the method for manufacturing the fiber-reinforced plastic of the present invention include a sheet molding compound (SMC) method, pultrusion, filament winding molding, resin transfer molding (RTM), vacuum-assisted RTM (VaRTM), autoclave molding, oven molding, sheet-wrap molding, internal pressure molding, and press molding.

The resin content (R.C.) of the fiber-reinforced plastic expressed in the following equation (3) is preferably 20 mass% to 60 mass%, and more preferably 20 mass% to 40 mass% in view of further exhibiting the strength of the fibers. However, in order to reduce the resin content, it is necessary to sufficiently permeate the resin in a small amount between the reinforcing fibers, and therefore, it is needless to say that sufficient consideration is required for the impregnating ability of the resin.

[Math. 3]

$$\text{Resin Content} = [(\text{Weight of Curable Resin Composition})/(\text{Weight of Reinforcing Fibers} + \text{Weight of Curable Resin Composition})] \times 100 \qquad (3)$$

[Examples]

The present invention will now be described based on examples. The present invention is not limited to these examples, and various modifications and variations of these examples can be made without departing from the scope and spirit of the present invention.

The materials used for producing the curable resin composition are shown below.

(1) Thermosetting resin 1: bisphenol A-type epoxy resin (trade name: JER828, manufactured by Mitsubishi Chemical Corporation)

(2) Thermosetting resin 2: polyfunctional epoxy resin (trade name: JER604, manufactured by Mitsubishi Chemical Corporation)

(3) Thermosetting resin 3: bisphenol A/F mixed epoxy resin (trade name: DENATOOLXNR6809, manufactured by Nagase ChemteX Corporation)

(4) Curing agent 1: modified aromatic amine grade (trade name: WA, manufactured by Mitsubishi Chemical Corporation)

(5) Curing agent 2: modified alicyclic acid anhydride (trade name: DENATOOLXNH6809, manufactured by Nagase ChemteX Corporation)

(Example 1)

<Production of Composite Powder>

First, a composite powder containing cellulose nanofibers and a silicon-based porous material was produced. More specifically, an aqueous solution of cellulose nanofibers in which cellulose nanofibers that had undergone fibrillation by using a TEMPO oxidation catalyst were dispersed (trade name: RHEOCRYSTA I-2SX, manufactured by DKS Co. Ltd., the content of solids of cellulose nanofibers: 2.0 mass%) was diluted with ion-exchanged water so that the content of the cellulose nanofibers would be 1.0 mass%.

If the aqueous solution of cellulose nanofibers becomes acidic, the repulsive force of an electric double layer of cellulose fibers is weakened, and moreover, a hydrogen bonding point is formed between fibrils, which causes aggregation of the cellulose fibers and results in gelation. If an aqueous solution of polyvalent metal salt is added, a COONa group introduced in the cellulose nanofibers is substituted with a COOM group (wherein M is a polyvalent metal) by, for example, a TEMPO-mediated oxidation reaction, which results in gelation. In order to prevent these, ammonia water may be added as appropriate to make the aqueous solution of cellulose nanofibers in Examples always alkaline.

Subsequently, 9.09 g of diatomaceous earth (trade name: Celpure S-300, manufactured by Sanshin Filter Industry Co., Ltd., the pore diameter of pores: 50 nm to 600 nm) was added to 91 g of the diluted aqueous solution of cellulose nanofibers and continuously stirred for 5 hours to prepare a dispersion liquid (slurry).

The concentration of the cellulose nanofibers in the aqueous solution of cellulose nanofibers, which is 1.0 mass% (i.e., Y=1.0 in the expression (1)), satisfies the relationship of the expression (1) when the content ratio of the cellulose nanofibers and the diatomaceous earth in the aqueous solution in which the cellulose nanofibers are dispersed is cellulose nanofibers : diatomaceous earth = 1:10 (i.e., X=10 in the expression (1)) on the mass basis.

Next, the prepared dispersion liquid was dried, and water as a dispersion medium was removed, thereby producing a dried material containing the cellulose nanofibers and the silicon-based porous material. More specifically, the prepared dispersion liquid was transferred into a thin stainless-steel dish (tray), which was kept under static conditions in a hot air drying oven of 80°C overnight or longer to remove water as the dispersion medium, thereby producing a plate-shaped dried material.

The produced plate-shaped dried material was ground with a food processor (trade name: powder mill grinder SG-10BJK, manufactured by Cuisinart) and classified with a classifier, specifically a sieve (stainless-steel sieve manufactured by SANPO) to collect a composite powder of Example 1 having a particle diameter of 150 μm or less and composition (parts by mass) shown in Table 1 (i.e., cellulose nanofibers : diatomaceous earth = 1 : 10 on a mass basis).

FIG. 2 is a scanning electron microscope (SEM) photograph showing the state of the composite powder of this Example. In the composite powder of this Example, the cellulose nanofibers are supported while entering the pores (pipe-shaped pores) of the diatomaceous earth, as shown in the central portion of the photograph in FIG. 2.

<Elemental Analysis of Composite Powder>

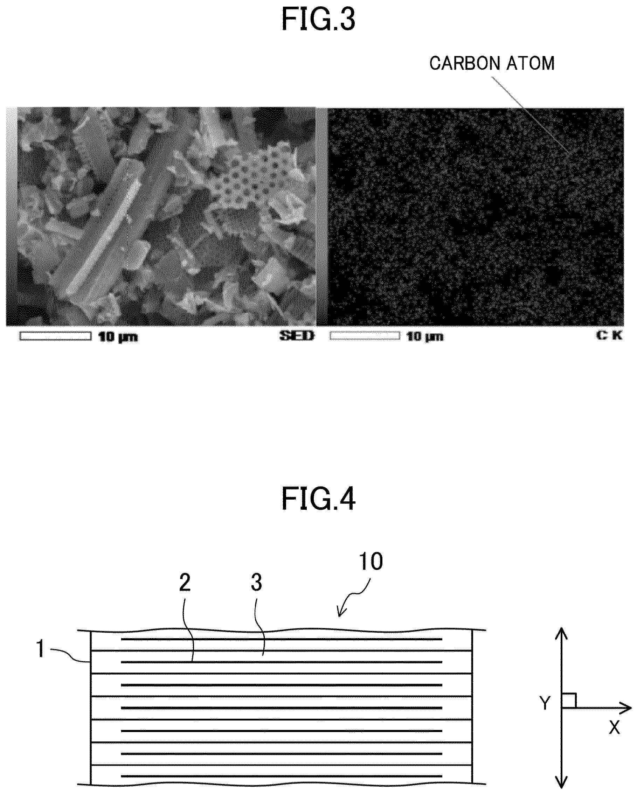

FIG. 3 shows the result of the analysis (analysis of carbon atoms) of the composite powder of this Example by energy-dispersive X-ray spectroscopy (EDS) using a scanning electron microscope (SEM), together with scanning electron microscope (SEM) photographs.

As shown in FIG. 3, there are carbon atoms derived from the cellulose nanofibers (white portions in FIG. 3), which means that there are cellulose nanofibers dispersed in the entire composite powder.

A scanning electron microscope (trade name: JSM-IT100, manufactured by JEOL Ltd.) was employed in the SEM observation and EDS analysis.

<Production of Curable Resin Composition and Evaluation of Dispersibility of Composite Powder in Thermosetting Resin>

The produced composite powder was mixed in the thermosetting resin 1 (epoxy resin) shown in Table 2 at room temperature (25°C) to produce a curable resin composition, and dispersibility of the composite powder in the epoxy resin of the produced curable resin composition was evaluated.

More specifically, first, 25 parts by mass of the curing agent and 0.1 parts by mass of the produced composite powder were added relative to 100 parts by mass of the thermosetting resin, which was then stirred and mixed at room temperature for a stirring time of 5 minutes and a defoaming time of 3 minutes by using a mix and defoam machine (trade name: Hi-Merger HM-200WD, manufactured by KYORITSU SEIKI) under the setting 7 of the machine. Thus, a curable resin composition in which the composite powder was dispersed in the thermosetting resin was produced.

Next, dispersibility of the composite powder in the epoxy resin of the produced curable resin composition was evaluated. More specifically, if the composite powder was not precipitated under static conditions for 1 minute after the adding and mixing of the composite powder, it was evaluated as ○, and if the composite powder was aggregated during the operation of adding and mixing the composite powder or the composite powder was precipitated under static conditions for 1 minute after the adding and mixing of the composite powder, it was evaluated as ×. Table 2 shows the results.

<Evaluation of Impregnating Ability>

Next, the viscosity of the produced curable resin composition was measured using an E-type viscometer (cone-plate type rotary viscometer, trade name: TPE-100, manufactured by TOKISANGYO). The measurement was performed under the conditions of a cone rotor (3° × R12), a rotational speed of 1.9 rpm, and a shear rate of 3.8 (1/s). The temperature was increased from the room temperature (25°C) at a rate of 5 °C/min, and the viscosity was measured at the room temperature (25°C), 30°C, 40°C, 50°C, 60°C, and 70°C while holding each temperature for 1 minute.

As a reference sample, a curable resin composition (a curable resin composition made of only a thermosetting resin 1 and a curing agent 1) containing no composite powder shown in Table 2 was prepared. The viscosities of the reference sample were measured by the same method, and the viscosities of the reference sample at the respective measurement temperatures (i.e., room temperature (25°C), 30°C, 40°C, 50°C, 60°C, and 70°C) were compared with the viscosity of the curable resin composition of this Example. If the viscosity of the curable resin composition of this Example was 3.5 times or less the viscosity of the reference sample (i.e., the viscosity of the curable resin composition containing the composite powder added was not too high, and the curable resin composition could easily permeate into the reinforcing fibers such as carbon fibers), it was evaluated as ○, and if the viscosity of the curable resin composition of this Example was larger than 3.5 times the viscosity of the reference sample (i.e., the viscosity of the curable resin composition containing the composite powder added was too high, and the curable resin composition was difficult to permeate into the reinforcing fibers such as carbon fibers), it was evaluated as ×. Table 2 shows the results.

<Evaluation of Strength>

Next, carbon fibers (trade name: TORAYCA T700S, manufactured by TORAY INDUSTRIES, INC.) were impregnated with the produced curable resin composition to produce a unidirectional long-fiber prepreg (a sheet-like intermediate material in which carbon fibers are impregnated with the produced curable resin composition). As illustrated in FIG. 4, 16 prepregs (210 mm × 210 mm) produced were prepared, stacked so that the carbon fibers 2 in each prepreg 1 were arranged in the same direction (i.e., the direction of arrow X in FIG. 4), and then pressed under the conditions of a press pressure: 7.85 MPa, a press temperature: 175°C, and a press time: 4 hours, to produce a prepreg laminate (CFRP) 10 having a thickness of 2 mm.

Then, the prepreg laminate 10 produced was cut to produce a sample of 25 mm × 110 mm. Al tabs of 25 mm × 50 mm (the 15 mm at the tip is tapered) were attached to the upper and lower end surfaces of the produced sample to obtain a test piece. The test piece was subjected to a tensile test in a direction at 90° relative to the direction in which the carbon fibers 2 are arranged (i.e., a direction indicated by an arrow Y in FIG. 4) at a tensile speed of 1 mm/min by using a tensile tester (trade name: Autograph AG-Xplus, manufactured by Shimadzu Corporation), and the strength at break was used as the tensile strength of the curable resin composition 3.

As illustrated in FIG. 4, the "direction at 90° relative to the direction in which the carbon fibers 2 are arranged" is referred to as a direction (the direction indicated by the arrow Y) orthogonal to the direction (0° axis) in which carbon fibers 2 are arranged when the direction in which the carbon fibers 2 in the prepreg laminate 10 are arranged (which is an axial direction, a direction indicated by the arrow X) is defined as 0°.

The strength in the direction at 90° relative to the direction in which the carbon fibers are arranged shows the strength caused by the curable resin composition without influence of the strength of the carbon fibers (the strength of only the curable resin composition, the strength of the adhesion at the interface between the carbon fibers and the curable resin composition, or both of them).

As a reference sample, a curable resin composition containing no composite powder shown in Table 2 (the curable resin composition made of only a thermosetting resin 1 and a curing agent 1) was prepared, and in the same manner as described above, the tensile strength of the reference sample was calculated and compared with the tensile strength of the curable resin composition of this Example. If the tensile strength of the curable resin composition of this Example was larger than the tensile strength of the reference sample, it was evaluated as ○, and if the tensile strength of the curable resin composition of this example was equal to or less than the tensile strength of the reference sample, it was evaluated as ×. Table 2 shows the results.

Here, since the strength of the carbon fibers is larger than the strength of the curable resin composition to be used, in the structure (CFRP) of the curable resin composition, the break point is resin, an interface between resin and fibers, or the interface between sheet (layer) and the sheet (layer) if the structure is formed by stacking sheet-like prepregs. A break at the interface between layers is also referred to as "delamination."

In the above-described various methods for producing a fiber-reinforced plastic, the common features are that microscopic gaps are present between fibers, there is a portion of only resin, and there is necessarily an interface between resin and fibers. It is thus needless to say that the improvement of the "tensile strength in the direction at 90° relative to the direction in which the carbon fibers 2 are arranged" is very effective in view of strengthening the portion of only the resin or the interface between the resin and the fibers.

In the above-described various methods for producing a fiber-reinforced plastic, when the laminate is produced, it is also possible to partially use, in a layer to which stress is particularly applied, the curable resin composition to which the composite powder of the invention of the present application is added.

(Examples 2 to 44 and Comparative Examples 1 to 3, 6 to 8, and 10 to 13)

The curable resin compositions were produced in the same manner as in Example 1 except that the types and contents of the thermosetting resin and the curing agent, the type of the silicon-based porous material, the amount of the composite powder to be added relative to 100 parts by mass of the thermosetting resin, and the content ratio of the cellulose nanofibers and the silicon-based porous material in the composite powder were changed to values shown in Tables 2 to 8.

The dispersibility of the composite powder in the thermosetting resin, the impregnating ability, and the strength were evaluated in the same manner as in Example 1. Tables 2 to 8 show the results.

In Comparative Examples 10 to 12, the ratio of the diatomaceous earth to the cellulose nanofibers was small, and in the evaluation of dispersibility, the cellulose nanofibers were aggregated and precipitated. Thus, the impregnating ability evaluation and the strength evaluation described above could not be performed.

In Comparative Example 13, the ratio of the diatomaceous earth to the cellulose nanofibers was large, and the content of the composite powder relative to 100 parts by mass of the thermosetting resin was larger than 10 parts by mass. Thus, in the evaluation of dispersibility, dispersibility of the composite powder decreased, and the impregnating ability evaluation and the strength evaluation described above could not be performed.

(Comparative Example 4)

The curable resin composition was produced in the same manner as in Example 1 except that the composite powder was not produced, and only the diatomaceous earth (9.1 parts by mass) was used (i.e., single diatomaceous earth was used) instead of the composite powder of Example 1.

The dispersibility of the composite powder in the thermosetting resin, the impregnating ability, and the strength were evaluated in the same manner as in Example 1. In the evaluations of impregnating ability and strength, a curable resin composition containing no diatomaceous earth shown in Table 6 (the curable resin composition made of only a thermosetting resin 1 and a curing agent 1) was used as a reference sample. Table 6 shows the results.

(Comparative Example 5)

The curable resin composition was produced in the same manner as in Example 1 except that the composite powder was not produced, and only the cellulose nanofibers (0.9 parts by mass) were used (i.e., single cellulose nanofibers were used) instead of the composite powder of Example 1.

The dispersibility of the composite powder in the thermosetting resin was evaluated in the same manner as in Example 1. Table 6 shows the results.

In the evaluation of dispersibility, the cellulose nanofibers were aggregated and precipitated. Thus, the impregnating ability evaluation and the strength evaluation described above could not be performed.

In this Comparative Example, an aqueous solution of cellulose nanofibers in which cellulose nanofibers that had undergone fibrillation by using a TEMPO oxidation catalyst were dispersed (trade name: RHEOCRYSTA I-2SX, manufactured by DKS Co. Ltd., the content of solids of cellulose nanofibers: 2.0 mass%) was dried and then ground (drying under static conditions in an atmosphere at 80°C for 3 days and grinding with a food processor), and the resultant was used as cellulose nanofibers.

(Comparative Example 9)

The curable resin composition was produced in the same manner as in Example 1 except that the composite powder was not produced, and only the zeolite (9.1 parts by mass) was used (i.e., single zeolite was used) instead of the composite powder of Example 1.

The dispersibility of the composite powder in the thermosetting resin, the impregnating ability, and the strength were evaluated in the same manner as in Example 1. In the evaluations of impregnating ability and strength, a curable resin composition containing no zeolite shown in Table 7 (the curable resin composition made of only a thermosetting resin 1 and a curing agent 1) was used as a reference sample. Table 7 shows the results.

[Table 2]

| | | Examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Thermosetting Resin 1 (parts by mass) | | 100 | 100 | 100 | 100 | 100 | 100 | 100 | 100 | 100 | 100 | 100 | 100 | 100 | 100 |
| Thermosetting Resin 2 (parts by mass) | | - | - | - | - | - | - | - | - | - | - | - | - | - | - |
| Thermosetting Resin 3 (parts by mass) | | - | - | - | - | - | - | - | - | - | - | - | - | - | - |
| Curing Agent 1 (parts by mass) | | 25 | 25 | 25 | 25 | 25 | 25 | 25 | 25 | 25 | 25 | 25 | 25 | 25 | 25 |
| Curing Agent 2 (parts by mass) | | - | - | - | - | - | - | - | - | - | - | - | - | - | - |
| Composite Powder (parts by mass) | Amount of CNF Added Relative to 100 Parts by Mass of Thermosetting Resin | 0.01 | 0.05 | 0.23 | 0.45 | 0.68 | 0.91 | 0.02 | 0.08 | 0.83 | 1.6 | 0.005 | 0.024 | 0.24 | 0.48 |
| | Amount of Diatomaceous Earth Added Relative to 100 Parts by Mass of Thermosetting Resin | 0.09 | 0.45 | 2.27 | 4.50 | 6.80 | 9.09 | 0.10 | 0.42 | 4.17 | 8.0 | 0.095 | 0.476 | 4.76 | 9.52 |
| | Amount of Composite Powder Added Relative to 100 Parts by Mass of Thermosetting Resin | 0.1 | 0.5 | 2.5 | 4.95 | 7.5 | 10 | 0.12 | 0.5 | 5 | 9.6 | 0.1 | 0.5 | 5 | 10 |
| | CNF:Diatomaceous Earth | 1:9 | 1:9 | 1:10 | 1:10 | 1:10 | 1:10 | 1:5 | 1:5 | 1:5 | 1:5 | 1:19 | 1:20 | 1:20 | 1:20 |
| Single Diatomaceous Earth (parts by mass) | | - | - | - | - | - | - | - | - | - | - | - | - | - | - |
| Single CNF (parts by mass) | | - | - | - | - | - | - | - | - | - | - | - | - | - | - |
| Dispersibility | | ○ | ○ | ○ | ○ | ○ | ○ | ○ | ○ | ○ | ○ | ○ | ○ | ○ | ○ |
| Impregnating Ability | | ○ | ○ | ○ | ○ | ○ | ○ | ○ | ○ | ○ | ○ | ○ | ○ | ○ | ○ |
| Strength | | ○ | ○ | ○ | ○ | ○ | ○ | ○ | ○ | ○ | ○ | ○ | ○ | ○ | ○ |

[Table 3]

| | | Examples | | | | | | | | | | | | |
|---|---|---|---|---|---|---|---|---|---|---|---|---|---|---|
| | | 15 | 16 | 17 | 18 | 19 | 20 | 21 | 22 | 23 | 24 | 25 | 26 | 27 | 28 |
| Thermosetting Resin 1 (parts by mass) | | 100 | 100 | 100 | 100 | 100 | 100 | 100 | 100 | 100 | 100 | 100 | 100 | 100 | 100 |
| Thermosetting Resin 2 (parts by mass) | | - | - | - | - | - | - | - | - | - | - | - | - | - | - |
| Thermosetting Resin 3 (parts by mass) | | - | - | - | - | - | - | - | - | - | - | - | - | - | - |
| Curing Agent 1 (parts by mass) | | 25 | 25 | 25 | 25 | 25 | 25 | 25 | 25 | 25 | 25 | 25 | 25 | 25 | 25 |
| Curing Agent 2 (parts by mass) | | - | - | - | - | - | - | - | - | - | - | - | - | - | - |
| Composite Powder (parts by mass) | Amount of CNF Added Relative to 100 Parts by Mass of Thermosetting Resin | 0.01 | 0.05 | 0.23 | 0.45 | 0.68 | 0.91 | 0.02 | 0.08 | 0.83 | 1.6 | 0.005 | 0.024 | 0.24 | 0.48 |
| | Amount of Zeolite Added Relative to 100 Parts by Mass of Thermosetting Resin | 0.09 | 0.45 | 2.27 | 4.50 | 6.80 | 9.09 | 0.10 | 0.42 | 4.17 | 8.0 | 0.095 | 0.476 | 4.76 | 9.52 |
| | Amount of Composite Powder Added Relative to 100 Parts by Mass of Thermosetting Resin | 0.1 | 0.5 | 2.5 | 4.95 | 7.5 | 10 | 0.12 | 0.5 | 5 | 9.6 | 0.1 | 0.5 | 5 | 10 |
| | CNF:Zeolite | 1:9 | 1:9 | 1:10 | 1:10 | 1:10 | 1:10 | 1:5 | 1:5 | 1:5 | 1:5 | 1:19 | 1:20 | 1:20 | 1:20 |
| Single Zeolite (parts by mass) | | - | - | - | - | - | - | - | - | - | - | - | - | - | - |
| Dispersibility | | ○ | ○ | ○ | ○ | ○ | ○ | ○ | ○ | ○ | ○ | ○ | ○ | ○ | ○ |
| Impregnating Ability | | ○ | ○ | ○ | ○ | ○ | ○ | ○ | ○ | ○ | ○ | ○ | ○ | ○ | ○ |
| Strength | | ○ | ○ | ○ | ○ | ○ | ○ | ○ | ○ | ○ | ○ | ○ | ○ | ○ | ○ |

EP 4 606 867 A1

[Table 4]

| | | Examples | | | | | | | |
|---|---|---|---|---|---|---|---|---|---|
| | | 29 | 30 | 31 | 32 | 33 | 34 | 35 | 36 |
| Thermosetting Resin 1 (parts by mass) | | 50 | 50 | 50 | 50 | - | - | - | - |
| Thermosetting Resin 2 (parts by mass) | | 50 | 50 | 50 | 50 | - | - | - | - |
| Thermosetting Resin 3 (parts by mass) | | - | - | - | - | 100 | 100 | 100 | 100 |
| Curing Agent 1 (parts by mass) | | 31 | 31 | 31 | 31 | - | - | - | - |
| Curing Agent 2 (parts by mass) | | - | - | - | - | 95 | 95 | 95 | 95 |
| Composite Powder (parts by mass) | Amount of CNF Added Relative to 100 Parts by Mass of Thermosetting Resin | 0.01 | 0.05 | 0.45 | 0.91 | 0.01 | 0.05 | 0.45 | 0.91 |
| | Amount of Diatomaceous Earth Added Relative to 100 Parts by Mass of Thermosetting Resin | 0.09 | 0.45 | 4.50 | 9.09 | 0.09 | 0.45 | 4.50 | 9.09 |
| | Amount of Composite Powder Added Relative to 100 Parts by Mass of Thermosetting Resin | 0.1 | 0.5 | 4.95 | 10 | 0.1 | 0.5 | 4.95 | 10 |
| | CNF:Diatomaceous Earth | 1:9 | 1:9 | 1:10 | 1:10 | 1:9 | 1:9 | 1:10 | 1:10 |
| Single Diatomaceous Earth (parts by mass) | | - | - | - | - | - | - | - | - |
| Single CNF (parts by mass) | | - | - | - | - | - | - | - | - |
| Dispersibility | | ○ | ○ | ○ | ○ | ○ | ○ | ○ | ○ |
| Impregnating Ability | | ○ | ○ | ○ | ○ | ○ | ○ | ○ | ○ |
| Strength | | ○ | ○ | ○ | ○ | ○ | ○ | ○ | ○ |

[Table 5]

| | Examples | | | | | | | |
|---|---|---|---|---|---|---|---|---|
| | 37 | 38 | 39 | 40 | 41 | 42 | 43 | 44 |
| Thermosetting Resin 1 (parts by mass) | 50 | 50 | 50 | 50 | - | - | - | - |
| Thermosetting Resin 2 (parts by mass) | 50 | 50 | 50 | 50 | - | - | - | - |
| Thermosetting Resin 3 (parts by mass) | - | - | - | - | 100 | 100 | 100 | 100 |
| Curing Agent 1 (parts by mass) | 31 | 31 | 31 | 31 | - | - | - | - |
| Curing Agent 2 (parts by mass) | - | - | - | - | 95 | 95 | 95 | 95 |

EP 4 606 867 A1

(continued)

| | | Examples | | | | | | | |
| --- | --- | --- | --- | --- | --- | --- | --- | --- | --- |
| | | 37 | 38 | 39 | 40 | 41 | 42 | 43 | 44 |
| Composite Powder (parts by mass) | Amount of CNF Added Relative to 100 Parts by Mass of Thermosetting Resin | 0.01 | 0.05 | 0.45 | 0.91 | 0.01 | 0.05 | 0.45 | 0.91 |
| | Amount of Zeolite Added Relative to 100 Parts by Mass of Thermosetting Resin | 0.09 | 0.45 | 4.50 | 9.09 | 0.09 | 0.45 | 4.50 | 9.09 |
| | Amount of Composite Powder Added Relative to 100 Parts by Mass of Thermosetting Resin | 0.1 | 0.5 | 4.95 | 10 | 0.1 | 0.5 | 4.95 | 10 |
| | CNF:Zeolite | 1:9 | 1:9 | 1:10 | 1:10 | 1:9 | 1:9 | 1:10 | 1:10 |
| Single Diatomaceous Earth (parts by mass) | | - | - | - | - | - | - | - | - |
| Single CNF (parts by mass) | | - | - | - | - | - | - | - | - |
| Dispersibility | | ○ | ○ | ○ | ○ | ○ | ○ | ○ | ○ |
| Impregnating Ability | | ○ | ○ | ○ | ○ | ○ | ○ | ○ | ○ |
| Strength | | ○ | ○ | ○ | ○ | ○ | ○ | ○ | ○ |

[Table 6]

| | | Comparative Example | | | | |
| --- | --- | --- | --- | --- | --- | --- |
| | | 1 | 2 | 3 | 4 | 5 |
| Thermosetting Resin 1 (parts by mass) | | 100 | 100 | 100 | 100 | 100 |
| Thermosetting Resin 2 (parts by mass) | | - | - | - | - | - |
| Thermeosetting Resin 3 (parts by mass) | | - | - | - | - | - |
| Curing Agent 1 (parts by mass) | | 25 | 25 | 25 | 25 | 25 |
| Curing Agent 2 (parts by mass) | | - | - | - | - | - |
| Composite Powder (parts by mass) | Amount of CNF Added Relative to 100 Parts by Mass of Thermosetting Resin | 0.005 | 1 | 1.091 | - | - |
| | Amount of Diatomaceous Earth Added Relative to 100 Parts by Mass of Thermosetting Resin | 0.045 | 10 | 10.909 | - | - |
| | Amount of Composite Powder Added Relative to 100 Parts by Mass of Thermosetting Resin | 0.05 | 11 | 12 | - | - |
| | CNF:Diatomaceous Earth | 1:9 | 1:10 | 1:10 | - | - |
| Single Diatomaceous Earth (parts by mass) | | - | - | - | 9.1 | - |
| Single CNF (parts by mass) | | - | - | - | - | 0.9 |
| Dispersibility | | ○ | ○ | ○ | ○ | × |
| Impregnating Ability | | ○ | × | × | ○ | - |
| Strength | | × | × | × | × | - |

18

[Table 7]

| | | Comparative Example | | | |
|---|---|---|---|---|---|
| | | 6 | 7 | 8 | 9 |
| Thermosetting Resin 1 (parts by mass) | | 100 | 100 | 100 | 100 |
| Thermosetting Resin 2 (parts by mass) | | - | - | - | - |
| Thermosetting Resin 3 (parts by mass) | | - | - | - | - |
| Curing Agent 1 (parts by mass) | | 25 | 25 | 25 | 25 |
| Curing Agent 2 (parts by mass) | | - | - | - | - |
| Composite Powder (parts by mass) | Amount of CNF Added Relative to 100 Parts by Mass of Thermosetting Resin | 0.005 | 1 | 1.091 | - |
| | Amount of Zeolite Added Relative to 100 Parts by Mass of Thermosetting Resin | 0.045 | 10 | 10.909 | - |
| | Amount of Composite Powder Added Relative to 100 Parts by Mass of Thermosetting Resin | 0.05 | 11 | 12 | - |
| | CNF:Zeolite | 1:9 | 1:10 | 1:10 | - |
| Single Zeolite (parts by mass) | | - | - | - | 9.1 |
| Dispersibility | | ○ | ○ | ○ | ○ |
| Impregnating Ability | | ○ | × | × | ○ |
| Strength | | × | × | × | × |

[Table 8]

| | | Comparative Example | | | |
|---|---|---|---|---|---|
| | | 10 | 11 | 12 | 13 |
| Thermosetting Resin 1 (parts by mass) | | 100 | 100 | 100 | 100 |
| Thermosetting Resin 2 (parts by mass) | | | | | |
| Thermosetting Resin 3 (parts by mass) | | | | | |
| Curing Agent 1 (parts by mass) | | 25 | 25 | 25 | 25 |
| Curing Agent 2 (parts by mass) | | | | | |
| Composite Powder (parts by mass) | Amount of CNF Added Relative to 100 Parts by Mass of Thermosetting Resin | 1 | 1 | 1 | 1 |
| | Amount of Diatomaceous Earth Added Relative to 100 Parts by Mass of Thermosetting Resin | 4 | 3 | 2 | 25 |
| | Amount of Composite Powder Added Relative to 100 Parts by Mass of Thermosetting Resin | 5 | 4 | 3 | 26 |
| | CNF:Diatomaceous Earth | 1:4 | 1:3 | 1:2 | 1:25 |
| Dispersibility | | × | × | × | × |
| Impregnating Ability | | - | - | - | - |
| Strength | | - | - | - | - |

As shown in Tables 2 to 5, in the curable resin compositions of Examples 1 to 44, the content ratio of the cellulose nanofibers and the silicon-based porous material is cellulose nanofibers : silicon-based porous material = 1:5 to 1:20 on the mass basis (i.e., the content of the silicon-based porous material is 5 parts by mass to 20 parts by mass relative to 1 part by mass of the cellulose nanofibers). This causes the cellulose nanofibers to enter the pores of the silicon-based porous material (or attached to the surface of the silicon-based porous material) in the composite powder, and mitigates a reduction of the amount of cellulose nanofibers taken in the pores (or the amount of the cellulose nanofibers adhering to the surface of the silicon-based porous material) due to a shortage of the silicon-based porous material, thereby making it possible to prevent generation of aggregates of cellulose nanofibers on the surface of the silicon-based porous material. It is thus possible to disperse the cellulose nanofibers uniformly in the thermosetting resin (epoxy resin) in the curable resin composition.

In the curable resin composition of the Examples 1 to 44, the content of the composite powder relative to 100 parts by mass of the thermosetting resin is 0.1 parts by mass to 10 parts by mass. Thus, even when the composite powder is contained, the viscosity of the curable resin composition does not become too high, the carbon fibers can be easily impregnated with the curable resin composition (i.e., the impregnating ability of the curable resin composition for the carbon fibers can be maintained), and the strength of the curable resin composition in CFRP can be improved.

INDUSTRIAL APPLICABILITY

As can be seen from the foregoing description, the present invention is suitable for a curable resin composition for use in rubber, resin, and carbon fiber-reinforced plastic.

**Claims**

1. A curable resin composition at least comprising:

   a thermosetting resin; and
   a composite powder containing cellulose nanofibers and a silicon-based porous material,
   a content ratio of the cellulose nanofibers and the silicon-based porous material being cellulose nanofibers : silicon-based porous material = 1:5 to 1:20 on a mass basis,
   in the composite powder, the cellulose nanofibers at least adhering to a surface of the silicon-based porous material or entering pores of the silicon-based porous material,
   a content of the composite powder relative to 100 parts by mass of the thermosetting resin being 0.1 parts by mass to 10 parts by mass.

2. The curable resin composition of claim 1, wherein the cellulose nanofibers are obtained by chemical fibrillation.

3. The curable resin composition of claim 1 or 2, wherein the silicon-based porous material contains at least one of diatomaceous earth or zeolite.

4. The curable resin composition of claim 1 or 2, wherein the thermosetting resin is an epoxy resin.

5. The curable resin composition of claim 3, wherein the thermosetting resin is an epoxy resin.

6. A cured product obtained by curing the curable resin composition of claim 1 or 2.

7. A fiber-reinforced plastic comprising:

   the curable resin composition of claim 1 or 2; and
   reinforcing fibers (excluding the cellulose nanofibers).

# FIG.1

Plot of CONCENTRATION Y (MASS%) OF CNF (y-axis, 0.0 to 2.0) versus CONTENT X (PARTS BY MASS) OF DIATOMACEOUS EARTH (x-axis, 0 to 25).

$$Y = -0.048X + 1.96$$

$$Y = -0.0487X + 1.9233$$

# FIG.2

SEM image labeled: CNF; PORES OF DIATOMACEOUS EARTH. SED 15.0kV WD11mm P.C.50 HV x5,000 5 μm Sample 0000 Dec 14, 2018

# FIG.3

CARBON ATOM

10 μm     SED     10 μm     C K

# FIG.4

## INTERNATIONAL SEARCH REPORT

| International application No. |
|---|
| **PCT/JP2023/040211** |

| A. | CLASSIFICATION OF SUBJECT MATTER |
|---|---|

***C08L 101/12***(2006.01)i; ***C08J 5/10***(2006.01)i; ***C08K 3/34***(2006.01)i; ***C08L 1/02***(2006.01)i; ***C08L 63/00***(2006.01)i
FI:   C08L101/12; C08L1/02; C08K3/34; C08L63/00 C; C08J5/10 CFC

According to International Patent Classification (IPC) or to both national classification and IPC

| B. | FIELDS SEARCHED |
|---|---|

Minimum documentation searched (classification system followed by classification symbols)

C08L1/00-101/14; C08J5/10; C08K3/00-13/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/054690 A1 (DAIKIN IND LTD) 17 March 2022 (2022-03-17)<br>claims, examples 1-4 | 1-7 |
| A | JP 2013-188864 A (KMEW CO LTD) 26 September 2013 (2013-09-26)<br>claims, examples 1-4 | 1-7 |
| A | JP 2017-186187 A (JGC CATALYSTS & CHEMICALS LTD) 12 October 2017 (2017-10-12)<br>claims, examples | 1-7 |
| A | CN 115353826 A (SHICHEN MATERIAL TECHNOLOGY (SHANGHAI) CO., LTD.) 18 November 2022 (2022-11-18)<br>claims 1-9, examples 9-11 | 1-7 |
| A | JP 2008-518120 A (INDUSTRY-UNIVERSITY COOPERATION FOUNDATION SOGANGUNIVERSITY) 29 May 2008 (2008-05-29)<br>claims, examples II-VIII | 1-7 |
| P, A | WO 2022/255415 A1 (MIZUNO KK) 08 December 2022 (2022-12-08)<br>claims, paragraphs [0001], [0104], examples 1-9 | 1-7 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/040211**

| Patent document cited in search report | | | Publication date (day/month/year) | Patent family member(s) | | | Publication date (day/month/year) |
|---|---|---|---|---|---|---|---|
| WO | 2022/054690 | A1 | 17 March 2022 | EP 4212242 A1 claims, examples 1-4 CN 115996790 A | | | |
| JP | 2013-188864 | A | 26 September 2013 | (Family: none) | | | |
| JP | 2017-186187 | A | 12 October 2017 | (Family: none) | | | |
| CN | 115353826 | A | 18 November 2022 | (Family: none) | | | |
| JP | 2008-518120 | A | 29 May 2008 | US 2009/0101492 A1 claims, examples II-VII WO 2006/046837 A1 KR 10-2006-0036971 A | | | |
| WO | 2022/255415 | A1 | 08 December 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5341787 B
- JP 6471377 B